# EUROPEAN PATENT SPECIFICATION

(11) **EP 2 547 237 B1**
(45) Date of publication and mention of the grant of the patent: **27.09.2017**
(21) Application number: 11715025.0
(22) Date of filing: 18.02.2011
(51) Int. Cl.: A47C 16/04, A63C 5/00, A63C 17/28, B62B 13/06, A47C 9/02, A01B 75/00

(54) **PERSONAL KNEELING POSTURE SUPPORT ASSEMBLY**
PERSÖNLICHE ANORDNUNG ZUR UNTERSTÜTZUNG DER KNIENDEN STELLUNG
ENSEMBLE PERSONNEL DE SUPPORT DE POSTURE AGENOUILLÉE

(30) Priority: 16.03.2010 ZA 201001843
(43) Date of publication of application: 23.01.2013
(73) Proprietor: Lamos, August Wilhelm, Johannesburg 2092 (ZA)
(72) Inventor: Lamos, August Wilhelm, Johannesburg 2092 (ZA)
(74) Representative: Howson, Richard G.B.
(86) International application number: PCT/IB2011/000307
(87) International publication number: WO 2011/114201

(56) References cited:
- CA-A- 449 588
- DE-C- 475 970
- US-A- 5 427 391

## Description

### FIELD OF THE INVENTION

This invention relates to a personal kneeling posture support assembly for a person in order to assist in supporting the body in a generally kneeling posture.

Generally, although not necessarily, such a posture is required for the purpose of enabling a person to carry out low level, and especially near ground, activities using one or both hands whilst maintaining stress on the body at a reasonable level.

Whilst work-related activities are of prime consideration, recreational activities are also within the scope of the invention

### BACKGROUND TO THE INVENTION

A wide range of human manual activities take place at or near ground level. Such activities include those in the fields of construction, fabrication, mining, agriculture, maintenance, packing and cleaning and include activities in the fields of the natural sciences, the arts, recreation, and sport.

Activities which cannot be performed with the aid of reach extending tools from a standing or seated position, require the person performing the task, to stoop down, squat, or kneel in order to access a low level work site. Many of such activities are advantageously carried out from a kneeling position in which the body's weight is supported, at least in part, on the person's knees with the shins extending generally parallel to the ground.

Most of the relevant activities require the use of both hands, as well as a forward position of the head for improved vision. This results in at least some extent of stooping that, with no external support, stresses the body's musculoskeletal system, notably the muscles, tendons and intervertebral cartilage in and around the lumbar spinal region. Such stresses are greatly aggravated if additional loads are placed on the torso by lifting loads or handling heavy tools in the stooped position.

It is known that humans working in a stooped, squatting or kneeling position for extended periods of time often develop medical problems, commonly referred to as musculoskeletal disorders that include osteoarthritis, intervertebral cartilage damage, mensical injuries, nerve impingements, and others. Symptoms include discomfort, aches and pains, mainly in the lower back region, shoulders, elbows and knees, as well as more serious conditions, including disability.

Various knee and shin guards have therefore been proposed as well as movable kneeling posture support assemblies. The construction of the various knee and shin guards is not of direct relevance to the present invention, although any one of them may be selected for use in the implementation of this invention. These prior art knee guards will therefore not be discussed in any detail herein.

On the other hand, the movable kneeling posture support assemblies of the prior art require some further comment. These are generally of unitary construction with two knee supports and an intermediate body support for the chest or buttocks, or both, all mounted on a single frame, typically carried on castors or wheels for mobility. These prior art posture support assemblies share several disadvantages.

In particular, posture support assemblies mounted on castors tend to roll down sloped surfaces and are therefore difficult to control and manoeuvre on any but horizontal ground. Castors also exert a high specific pressure on the ground in the region of contact and therefore can leave marks on pressure-sensitive surfaces such as wooden and polished floors or floor screed that has not fully hardened. Castors further are difficult, if not impossible, to use on soft ground or even some carpets or other floor coverings, as the castors sink into the surface. Their relatively small size aslo makes their use difficult on rough surfaces as the castors tend to lodge in small holes and between protrusions.

United States Patent number US 6,302,413 to Comeaux is an example of one of these prior art proposals in which two knee supports and a seat are mounted on a single frame supported on five swiveling castors. A commercially available version of this includes a chest support arrangement. United States patent number US7070241 to Saulnier,is another example of this type of prior art proposal body support in which the body support can be used either for supporting the chest or buttocks.

Canadian patent number CA449588, on the other hand, addresses the needs of an agricultural worker and avoids the use of castors by employing two knee supporting sleds interconnected by a rigid crossbar pivotally attached to each sled and having a slotted end that allows forward motion of one sled relative to the other without any relative lateral movement. The crossbar is used to support a seat that is adjustable in height. The crossbar, in effect, serves as a tranvserse frame and the whole kneeling posture support assembly is a unitary structure and inappropriate for use under conditions other than an agricultural terrain. It is moved by alternately pushing one sled forward while the other remains stationary. Such a kneeling posture support assembly cannot practically be used on any other surfaces, especially undulating surfaces.

An other example of a known kneeling support is disclosed in DE 475970 C.

### OBJECT OF THE INVENTION

It is an object of this invention to provide a kneeling posture support assembly that overcomes, at least to some extent, one or more of the disadvantages of prior art support assemblies.

### SUMMARY OF THE INVENTION

According to a first aspect of this invention, there is provided a kneeling posture support assembly as defined in claim 1.

Further features of the invention provide for the knee supports to be of generally channel shape with appropriate internal padding and an external abrasion resistant and preferably friction affording surface for contacting a variety of different supporting surfaces; for the knee supports to have either straps for attaching them to the calves of a user or, alternatively, for the knee supports to have extended flanges for resiliently engaging the calves and optionally also the ankle of a user; and for the knee supports to be either of limited length extending from the knee and over at least a part of the shin of a user or of a length sufficiently long to accommodate the foot of a user as well in which instance the interior of the knee support may be provided with an elevated ankle support.

Still further features of the invention provide for the body support to have a ground engaging base comprising a single basic frame member extending in the general direction in which the knee supports extend and having laterally extending stabilizer members; for the body support to have a soft body engaging panel supported generally horizontally on upwardly extending supports that extend from the ground engaging base with the body engaging panel preferably being adjustable in inclination to accommodate a particular posture of a user; for the body support to be located operatively at a forward end of the kneeling posture support assembly for the purpose of supporting the chest of a user or towards a rear end region of the kneeling posture support assembly for supporting the buttocks of a user; for the body support to have two such panels, one for supporting the chest and one for supporting the buttocks of a user; for the height of the body engaging panel in each case to be adjustable; for each body engaging panel to be carried on an adjustable frame member and that is telescopically adjustable in position within a tubular single basic frame member forming part of the base with the forward or rearward position of the body engaging panel being adjustable according to the degree of telescopic interaction between the adjustable frame member and basic frame member with releasable stops being provided for fixing the relative positions of the adjustable frame member and basic frame member in a selected relative position; and for the body support to optionally be provided with additional support panels that may be configured for supporting the chin of a user or one or both forearms of a user.

Particular features of the invention provide for the elongate flexible connectors to each be resiliently flexible and to be preferably made of a moulded elastomer that can be reinforced using any appropriate reinforcing including a wide range of different reinforcing fibres such as glass fibres, carbon fibres, polymer fibres and filaments, woven or braided cords or cables, steel wire and suitable coil springs; for each flexible connector to be of inverted U-shape with the free end of one arm of the U being attached to the knee support and the free end of the other arm of the U being attached to the base of the body support; for the arms of the U to be either generally straight or outwardly bowed such that the U-shape assumes the general form of a capital omega [Ω]; and for the free ends of the arms of the U to be directed outwardly such that they are approximately coaxial.

In order that the above and other features of the invention may become more apparent, various different embodiments of the invention will now be described with reference to the accompanying drawings.

### BRIEF DESCRIPTION OF THE DRAWINGS

In the drawings:-
- Figure 1: is a schematic plan view of one embodiment of the invention showing only the base of the body support;
- Figure 2: is a similar view showing the one knee support moved forwards relative to the other and the resultant effect on the base of the body support;
- Figure 3: is a schematic perspective view of what is illustrated in Figure 2;
- Figure 4: is a schematic illustration showing the way in which forward movement can be achieved using the kneeling posture support assembly according to the invention;
- Figure 5: is a schematic plan view illustrating a removable support panel and its adjustable frame member in exploded relationship relative to the base of the body support;
- Figure 6: is a perspective view thereof;

- Figure 7: is a perspective view illustrating a different frame of the body support;
- Figure 8: illustrates a user in position on the kneeling posture support assembly;
- Figure 9: illustrates a user with his chest supported on a body support panel;
- Figure 10: illustrates a user utilizing a body support panel as a buttocks support;
- Figure 11: is the same as Figure 9 but shows a different length of knee support and a different attachment to a user's leg;
- Figure 12: is a front elevation of one embodiment of elongate flexible connector;
- Figure 13: is a side view thereof;
- Figure 14: is a plan view thereof;
- Figure 15: is an isometric view thereof;
- Figure 16: is a side view thereof illustrating the arms of the U flexed during a forward movement of one knee support;
- Figure 17: is an elevation similar to Figure 12 but illustrating the arms of the U bowed outwardly to form a generally Ω shape;

- Figure 18: illustrates schematically, in exploded view, the attachment of the elongate connectors to a central frame member and one knee support;
- Figure 19: is a sectional view of the central frame member shown in Figure 18;
- Figure 20: is a view similar to Figure 19 of an alternative arrangement and frame member;
- Figure 21: is a view similar to the Figure 18 illustrating the alternative shown in Figure 20;
- Figure 22: is a plan view similar to Figure 1 illustrating variations to the arrangement illustrated in Figure 1;
- Figure 23: is an isometric illustration of a shorter knee support as illustrated in Figure 8;
- Figure 24: is a similar illustration of the longer knee support illustrated in Figure 11; and,
- Figures 25 to 30: each illustrate schematically a variation of the invention.

### DETAILED DESCRIPTION WITH REFERENCE TO THE DRAWINGS

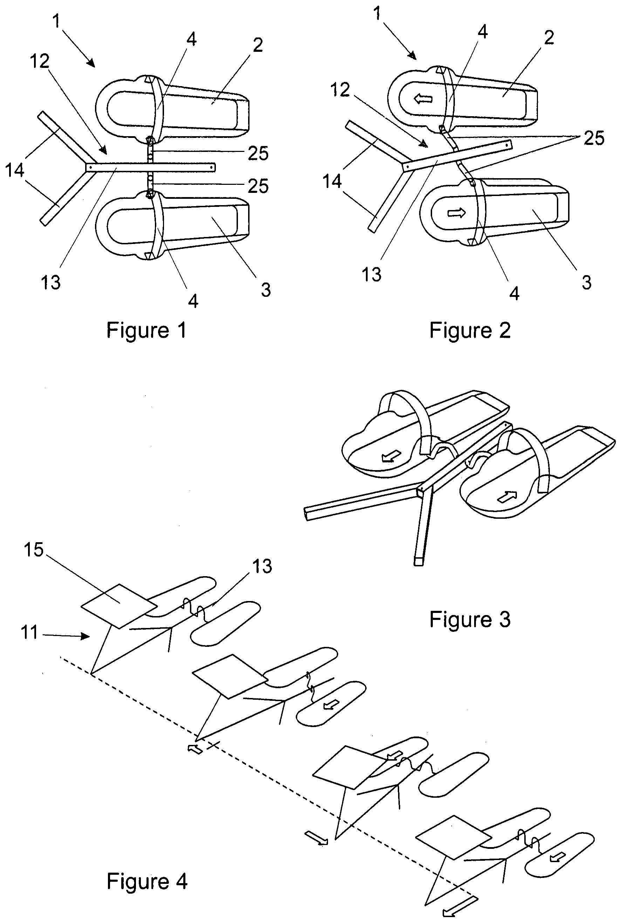

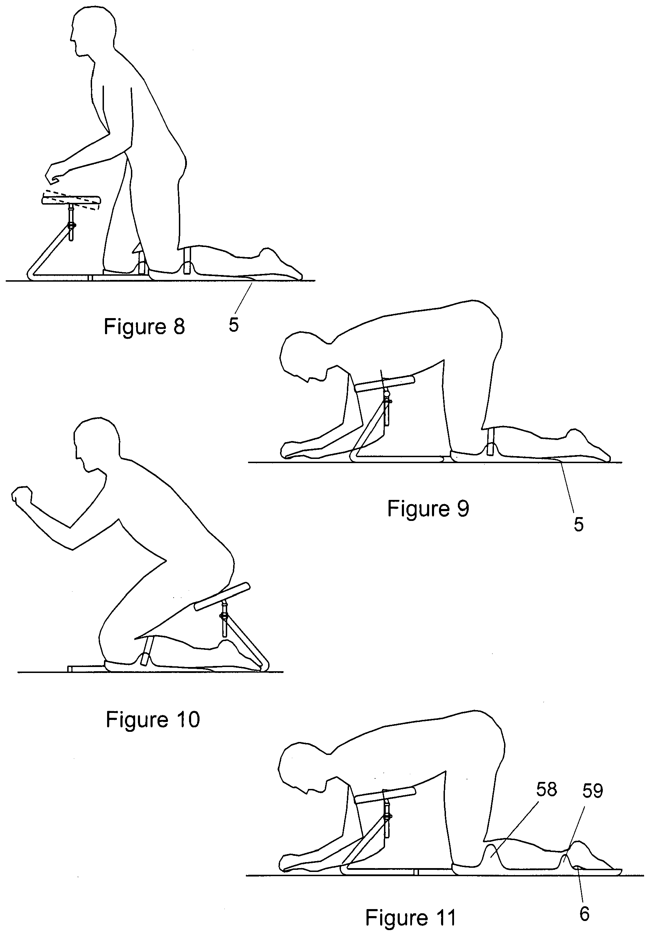

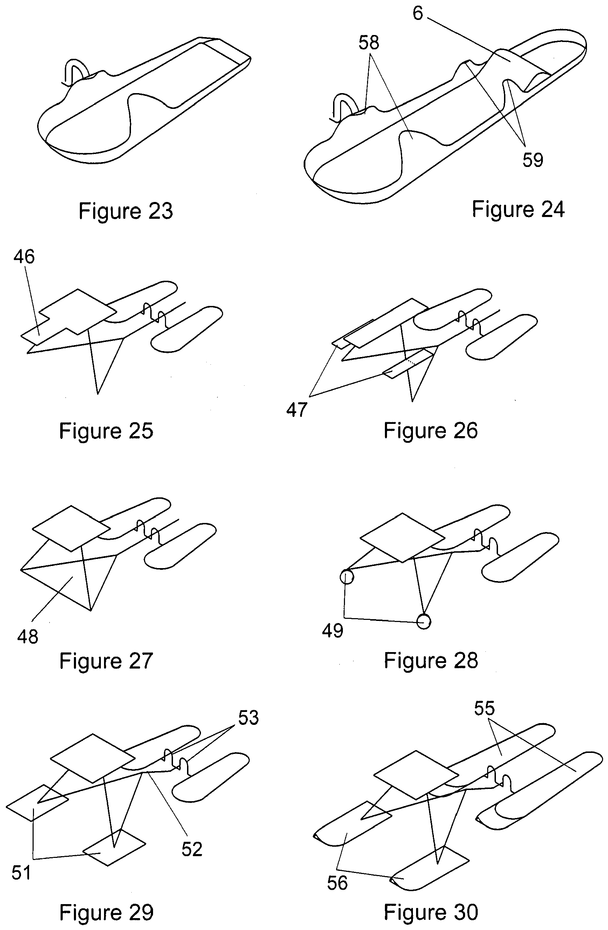

In the embodiment of the invention illustrated in Figures 1 to 6 of the accompanying drawings, a kneeling posture support assembly, generally indicated by numeral [1], has a pair of knee supports [2, 3] of generally channel shape in cross-section and having attachments in the form of straps [4] whereby the knee supports can be attached to the calves of the legs of a user, as illustrated in Figures 8 to 10. The knee supports are fitted with appropriate internal padding [not illustrated] and have an external abrasion resistant and preferably friction affording surface for contacting the ground or other supporting surface. The knee supports may be of limited length extending from the knee and over at least a part of the shin of a user, as illustrated in Figures 8 to 10 and 23 and as indicated by numeral [5], or they may be of a length sufficient to accommodate also the foot of a user in which instance the interior of the knee support is preferably provided with an elevated ankle support [6] as illustrated in Figures 11 and 24.

An intermediate body support [11] has a ground engaging base [12] comprising a single basic tubular frame member [13] extending in the general longitudinal direction in which the knee supports extend and a pair of divergent laterally extending stabilizer members [14] towards a forward end of the basic frame member for rendering the base freestanding on a generally horizontal surface.

A soft, body engaging panel [15] is supported generally horizontally on upwardly extending supports [16] that extend from an adjustable frame member [17] that is telescopically adjustable within the tubular single basic frame member [13] forming part of the base. The actual position of the body engaging panel is therefore adjustable and dependent on the degree of telescopic interaction between the adjustable frame member and basic frame member with releasable stops in the form of pins [18] cooperating with aligned holes [19] for fixing the relative positions of the adjustable frame member and basic frame member in a selected relative position.

The body engaging panel is capable of tilting in inclination to the horizontal in order to accommodate the particular posture of a user's body in use.

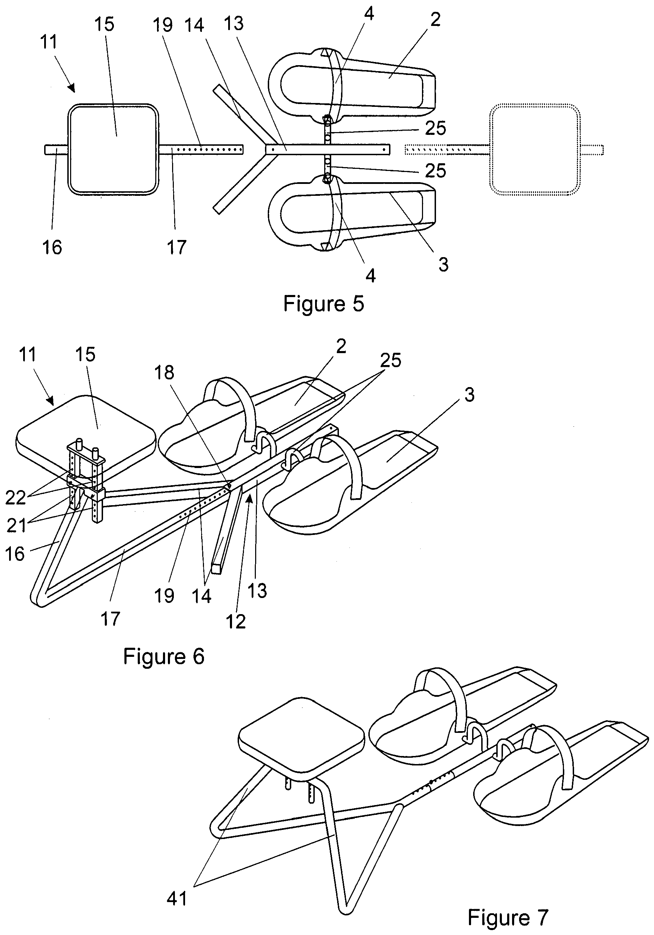

The body engaging panel may be located operatively at a forward end of the kneeling posture support assembly for the purpose of supporting the chest of a user, as illustrated in Figure 9, or towards a rear end region of the kneeling posture support assembly for supporting the buttocks of a user, as illustrated in Figure 10. Alternatively, the body support may have two such panels, one for supporting the chest and one for supporting the buttocks of a user. Both possible positions are illustrated in Figure 5.

The height of the body engaging panel in each case is adjustable conveniently by providing telescopically movable tubular supports [21] and a series of holes [22] providing a selection of heights at which the body engaging panel can be set.

As provided by this invention, each of the knee supports is tethered to the base of the body support by means of elongate elastomeric flexible connectors [25] that permit limited movement of the knee supports relative to each other and to the body support in both horizontal and vertical planes such that a part of any such limited relative movement of the knee supports is operatively transferred by way of the flexible connectors to the body support.

It will be understood that with this construction, each of the knee supports and the body support are independently freestanding on a supporting surface, with each knee support being tethered to the body support by the flexible connectors.

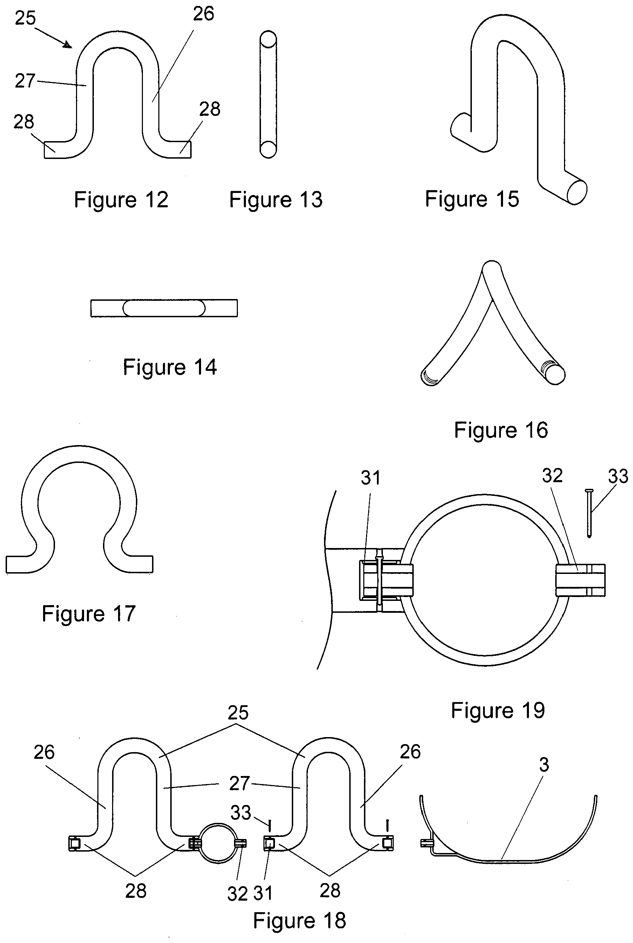

In this embodiment of the invention, and with particular reference to Figures 12 to 15 of the drawings, the elongate flexible connectors are each a resiliently flexible moulded elastomer that may be suitably reinforced. Each flexible connector is of inverted U-shape with the free end of one arm [26] of the U being attached to the knee support and the free end of the other arm [27] of the U being attached to the base of the body support. The arms of the U may be generally straight, as illustrated in the majority of the figures of the drawings or they may be outwardly bowed such that the U-shape assumes the general form of a capital omega [Ω], as illustrated in Figure 17. In each instance the free ends [28] of the arms of the U are directed outwardly such that they are approximately coaxial and extend at approximately right angles to the height of the U.

The ends of the U-shaped flexible connectors may be attached in any way and one possibility is illustrated in Figures 18 and 19. In this instance, a rigid cup [31] that may be of a suitable metal or a suitably strong, optionally reinforced plastic, is molded into the ends of the outwardly directed free ends of the arms. The tubular single basic frame member of the base may have spigots [32] projecting from its side surfaces so that the cup can receive the spigots and be attached to them using a pin [33], cotter pin, or screw passing through aligned holes.

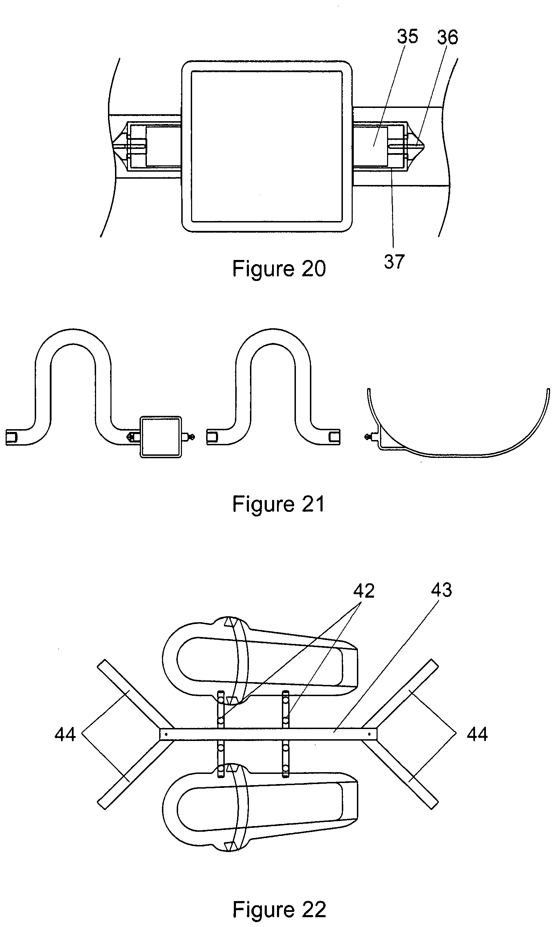

Alternatively, and as illustrated in Figures 20 and 21, the spigots [35] attached to the tubular single basic frame member may have bifurcated clips [36] that clip into apertures in the bottom of a cup [37] in each instance. There are numerous other ways in which a physical attachment can be made.

It will be understood that, in use, a kneeling posture support assembly as described above is used by strapping the two knee supports to the knees by passing the straps around the calves, as illustrated in Figures 8 to 10. The body support will then be located generally centrally between the two knee supports to which it is attached by means of the elastomeric flexible connectors. The body engaging panel may then be used to support the appropriate part of a user's body such as the chest, buttocks, or both, depending on the particular arrangement employed.

With this arrangement, and with particular reference to Figure 4, by transferring the weight from one knee to the other and moving the unloaded knee forwards or rearwards, the user can move around freely over any type of ground or other supporting surface. Such a motion may be termed "knee walking". As one knee support is moved forwards or rearwards, the body support automatically follows and is moved by approximately one half of the distance that the knee support itself is moved. During a forward movement, the inverted U-shaped connectors flex very much as is illustrated in side view in Figure 16. There is substantially complete freedom of movement and there is no limit imposed by undulations or imperfections in the supporting surface. The nature of the external surface of the knee supports and of the body support can be varied according to requirements and the duty to be performed.

Numerous variations may be made to the embodiment of the invention described above without departing from the scope hereof.

Figure 7 illustrates just one alternative arrangement of upwardly extending supports [41] and employs circular cross-sectioned tubular frame members in place of the square cross-section ones employed in the embodiment of the invention illustrated in Figures 1 to 6.

As illustrated in Figure 22, there may be two longitudinally spaced connectors [42] attaching each knee support to the central basic tubular frame member [43] with this arrangement maintaining the body support more parallel to the knee supports. Also the base of the body support could vary widely and it could have divergent stabilizer members [44] at both ends. The basic shape of the frame of the body support could vary considerably.

As shown in Figure 25, the body support panel may have an extension [46] for supporting the chin of a user.

As shown in Figure 26, the body support may include a pair of forearm supports [47].

As shown in Figure 27, the base may include a triangular or other shape of ground engaging panel [48] for enhancing support on particular types of surfaces.

As shown in Figure 28, the forward end of the body support may be mounted on castors [49].

As shown in Figure 29, the body support may include forward skids [51] for engaging certain types of surfaces. In this instance the frame [52] may be elevated between the connectors [53] and the body support.

As shown in Figure 30, the knee supports [55] and forward skids [56] may be formed as skis for negotiating snow in a sporting version of the kneeling posture support assembly.

As indicated above, and as illustrated in Figures 11 and 24, enlarged appropriately shaped extended flanges [58] may be used for attaching the knee supports to a user's calves. Additional such flanges [59] may, in the longer version of the knee supports, also embrace the ankles.

Numerous other variations are possible within the scope of the invention.

## Claims

1. A kneeling posture support assembly [1] comprising a pair of knee supports [2, 3] having attachments [4, 58, 59] whereby the knee supports [2, 3] can be attached to the legs of a user and an intermediate body support [11], wherein each of the knee supports [2, 3] and the intermediate body support [11] are free standing in the operative position independently of each other on a supporting surface, with each knee support [2, 3] being tethered, directly or indirectly, to the intermediate body support [11] and the other knee support [2, 3] by means of one or more elongate flexible connectors [25, 42, 53] that permit limited movement of the knee supports [2, 3] relative to each other in both horizontal and vertical planes such that a part of any such limited relative movement of the knee supports [2, 3] is operatively transferred by way of the one or more elongate flexible connectors [25, 42, 53], to the intermediate body support [11] and wherein the intermediate body support [11] has a ground engaging base [12] with at least one upwardly extending support [16, 41] operatively carrying a generally horizontal body engaging panel [15].

2. A kneeling posture support assembly as claimed in claim 1 in which the knee supports are of generally channel shape with appropriate internal padding and an external abrasion resistant surface for contacting a variety of different supporting surfaces.

3. A kneeling posture support assembly as claimed in either one of claims 1 or 2 in which the knee supports have attachments selected from straps [4] for attaching them to the calves of a user and extended flanges [58, 59] for resiliently engaging the calves of a user.

4. A kneeling posture support assembly as claimed in any one of the preceding claims in which the ground engaging base [12] comprises a single basic frame member [13] extending in the general longitudinal direction in which the knee supports extend with divergent laterally extending stabilizer members [14, 44].

5. A kneeling posture support assembly as claimed in any one of the preceding claims in which the body support has a soft body engaging panel [15] supported generally horizontally on upwardly extending supports [16, 41] that extend from the ground engaging base.

6. A kneeling posture support assembly as claimed in any one of the preceding claims in which the body support is located operatively at a forward end of the kneeling posture support assembly for the purpose of supporting the chest of a user.

7. A kneeling posture support assembly as claimed in any one of the preceding claims in which the body support is located operatively towards a rear end region of the kneeling posture support assembly for supporting the buttocks of a user.

8. A kneeling posture support assembly as claimed in any one of the preceding claims in which a body engaging panel is carried on a frame member [17] that is telescopically adjustable in position within a tubular single basic frame member [13] forming part of the base with the forward or rearward position of the body engaging panel being adjustable according to the degree of telescopic interaction between the adjustable frame member and basic frame member with releasable stops [19, 18] being provided for fixing the relative positions of the adjustable frame member and basic frame member in a selected relative position.

9. A kneeling posture support assembly as claimed in any one of the preceding claims in which the body support includes support panels [46, 47] configured for supporting the chin of a user or one or both forearms of a user.

10. A kneeling posture support assembly as claimed in any one of the preceding claims in which the elongate flexible connectors are each resiliently flexible.

11. A kneeling posture support assembly as claimed in any one of the preceding claims in which each flexible connector is of inverted U-shape with the free end [28] of one arm [26] of the U being attached to the knee support and the free end of the other arm [27] of the U being attached to the base of the body support.

12. A kneeling posture support assembly as claimed in claim 11 in which the free ends [28] of the arms of the U are directed outwardly such that they are approximately coaxial.

## Patentansprüche

1. Anordnung zur Unterstützung der knienden Stellung [1], die ein Paar Kniestützen [2, 3] mit Befestigungen [4, 58, 59], wodurch die Kniestützen [2, 3] an die Beine eines Benutzers befestigt werden können, und eine dazwischenliegende Körperstütze [11] aufweist, wobei jede der Kniestützen [2, 3] und die dazwischenliegende Körperstütze [11] in der Betriebsposition unabhängig voneinander auf einer Auflagefläche frei stehen, wobei jede Kniestütze [2, 3] direkt oder indirekt mit der dazwischenliegenden Körperstütze [11] und der anderen Kniestütze [2, 3] mittels eines oder mehrerer verlängerter flexibler Verbindungsstücke [25, 42, 53] festgemacht ist, die eine begrenzte Bewegung der Kniestützen [2, 3] bezüglich zueinander in sowohl horizontaler als auch vertikaler Ebene ermöglichen, so dass ein Teil jeder solcher begrenzter Relativbewegung der Kniestützen [2, 3] wirksam über das eine oder die mehreren verlängerten flexiblen Verbindungsstücke [25, 42, 53] auf die dazwischenliegende Körperstütze [11] übertragen wird und wobei die dazwischenliegende Körperstütze [11] eine Basis mit Bodenkontakt [12] mit mindestens einer sich nach oben erstreckenden Stütze [16, 41] hat, die wirksam eine im Allgemeinen horizontale Körper-Kopplungsplatte [15] trägt.

2. Anordnung zur Unterstützung der knienden Stellung nach Anspruch 1, bei der die Kniestützen im Allgemeinen kanalförmig mit geeigneter Innenpolsterung und einer äußeren abriebfesten Oberfläche zum Kontaktieren einer Vielzahl unterschiedlicher Stützflächen sind.

3. Anordnung zur Unterstützung der knienden Stellung nach einem der Ansprüche 1 oder 2, bei der die Kniestützen aus Riemen [4] ausgewählte Befestigungen, um sie an den Waden eines Benutzers zu befestigen, und erweiterte hervorspringende Ränder [58, 59] zum elastischen Koppeln mit den Waden eines Benutzers, haben.

4. Anordnung zur Unterstützung der knienden Stellung nach einem der vorhergehenden Ansprüche, bei welcher die Basis mit Bodenkontakt [12] ein einzelnes Grundrahmenelement [13] aufweist, das sich in die allgemeine Längsrichtung erstreckt, in die sich die Kniestützen mit divergenten, sich seitlich erstreckenden Stabilisierungselementen [14, 44] erstrecken.

5. Anordnung zur Unterstützung der knienden Stellung nach einem der vorhergehenden Ansprüche, bei der die Körperstütze eine weiche Körper-Kopplungsplatte [15] hat, die im Allgemeinen von sich horizontal nach oben erstreckenden Stützen [16, 41] gestützt wird, die sich aus der Basis mit Bodenkontakt erstrecken.

6. Anordnung zur Unterstützung der knienden Stellung nach einem der vorhergehenden Ansprüche, bei der die Körperstütze wirksam an einem vorderen Ende der Anordnung zur Unterstützung der knienden Stellung zum Zwecke des Abstützens der Brust eines Benutzers angeordnet ist.

7. Anordnung zur Unterstützung der knienden Stellung nach einem der vorhergehenden Ansprüche, bei der die Körperstütze wirksam an einem hinteren Endbereich der Anordnung zur Unterstützung der knienden Stellung zum Abstützen des Gesäßes eines Benutzers angeordnet ist.

8. Anordnung zur Unterstützung der knienden Stellung nach einem der vorhergehenden Ansprüche, bei der eine Körper-Kopplungsplatte auf einem Rahmenelement [17] getragen wird, das innerhalb eines einzelnen röhrenförmigen Grundrahmenelements [13], welches einen Teil der Basis bildet, teleskopartig in seiner Position einstellbar ist, wobei die Vorwärts- oder Rückwärtsposition der Körper-Kopplungsplatte gemäß des Grades des teleskopischen Zusammenwirkens des verstellbaren Rahmenelements und des Grundrahmenelements mit lösbaren Haltepunkten [19, 18], welche für das Befestigen der Relativpositionen des verstellbaren Rahmenelements und Grundrahmenelements in einer ausgewählten Relativposition bereitgestellt sind, einstellbar ist.

9. Anordnung zur Unterstützung der knienden Stellung nach einem der vorhergehenden Ansprüche, bei der die Körperstütze Stützplatten [46, 47] beinhaltet, die für das Stützen des Kinns oder eines oder beider Unterarme eines Benutzers gestaltet sind.

10. Anordnung zur Unterstützung der knienden Stellung nach einem der vorhergehenden Ansprüche, bei der die verlängerten flexiblen Verbindungsstücke jeweils elastisch biegsam sind.

11. Anordnung zur Unterstützung der knienden Stellung nach einem der vorhergehenden Ansprüche, bei der jedes flexible Verbindungsstück eine umgekehrte U-Form hat, wobei das freie Ende [28] eines Armes [26] des U an der Kniestütze befestigt ist und das freie Ende des anderen Armes [27] des U an der Basis der Körperstütze befestigt ist.

12. Anordnung zur Unterstützung der knienden Stellung nach Anspruch 11, bei der die freien Enden [28] der Arme des U nach außen gerichtet sind, so dass sie annäherungsweise koaxial sind.

## Revendications

1. Montage support de posture accroupie [1] comprenant une paire de supports pour genoux [2, 3] comportant des attaches [4, 58, 59], les supports pour genoux [2, 3] pouvant être attachés aux jambes d'un utilisateur et à un support intermédiaire pour le corps [11], chacun des supports pour genoux [2, 3] et le support intermédiaire pour le corps [11] étant librement en position fonctionnelle indépendamment les uns des autres sur une surface support, avec chaque support pour genoux [2, 3] attaché, directement ou indirectement, au support intermédiaire pour le corps [11] et à l'autre support pour genoux [2, 3] au moyen d'au moins un connecteur souple allongé [25, 42, 53] qui permet un mouvement limité des supports pour genoux [2, 3] l'un par rapport à l'autre à la fois dans les plans horizontaux et verticaux, de sorte qu'une partie de ce mouvement relatif limité des supports pour genoux [2, 3] est transféré fonctionnellement au moyen d'au moins un connecteur souple allongé [25, 42, 53] au support intermédiaire pour le corps [11], et le support intermédiaire pour le corps [11] comportant une base au sol [12] avec au moins un support s'étendant vers le haut [16, 41] portant fonctionnellement un panneau en contact avec le corps généralement horizontal [15].

2. Montage support de posture accroupie selon la revendication 1, dans lequel les supports pour genoux sont généralement en forme de canaux avec un rembourrage interne adéquat et une surface résistante à l'abrasion externe pour la mise en contact d'une variété de différentes surfaces supports.

3. Montage support de posture accroupie selon l'une des revendications 1 ou 2, où les supports pour genoux comportent des attaches choisies parmi des sangles [4] pour les attacher aux mollets d'un utilisateur et des brides étendues [58, 59] pour permettre l'engagement élastique des mollets d'un utilisateur.

4. Montage support de posture accroupie selon l'une quelconque des revendications précédentes, dans lequel la base au sol [12] comprend un unique élément cadre de base [13] qui s'étend dans la direction générale longitudinale, où les supports pour genoux s'étendent avec différents éléments stabilisateurs divergents s'étendant latéralement [14, 44].

5. Montage support de posture accroupie selon l'une quelconque des revendications précédentes, dans lequel le support pour le corps comporte un panneau souple pour le corps (15] supporté par des supports s'étendant généralement horizontalement et verticalement [16, 41] qui s'étendent depuis la base au sol.

6. Montage support de posture accroupie selon l'une quelconque des revendications précédentes, dans lequel le support pour le corps est situé fonctionnellement à une extrémité avant du support de posture accroupie dans le but de soutenir la poitrine d'un utilisateur.

7. Montage support de posture accroupie selon l'une quelconque des revendications précédentes, dans lequel le support pour le corps est situé fonctionnellement vers une extrémité arrière du support de posture accroupie dans le but de soutenir les fesses d'un utilisateur.

8. Montage support de posture accroupie selon l'une quelconque des revendications précédentes, dans lequel un panneau en contact avec le corps est supporté par un élément cadre [17] dont la position est téléscopiquement ajustable à l'intérieur d'un élément cadre de base tubulaire [13] faisant partie de la base, la position avant et arrière du panneau en contact avec le corps étant ajustable en fonction du degré d'interaction télescopique entre l'élément cadre ajustable et l'élément cadre de base, avec des butées séparables [19, 18] fournis pour fixer les positions relatives de l'élément cadre ajustable et l'élément cadre de base dans une position relative choisie.

9. Montage support de posture accroupie selon l'une quelconque des revendications précédentes, dans lequel le support pour le corps comporte des panneaux supports [46, 47] conçus pour soutenir le menton d'un utilisateur ou un ou les deux avant-bras d'un utilisateur.

10. Montage support de posture accroupie selon l'une quelconque des revendications précédentes, dans lequel les connecteurs souples allongés sont chacun souples de façon élastique.

11. Montage support de posture accroupie selon l'une quelconque des revendications précédentes, dans lequel chaque connecteur souple est en forme de U renversé avec l'extrémité libre [28] d'une branche [26] du U attachée au support pour genoux et l'extrémité libre de l'autre branche [27] du U attachée à la base du support pour corps.

12. Montage support de posture accroupie selon la revendication 11, dans lequel les extrémités libres [28] des branches du U sont dirigées vers l'extérieur de façon à être approximativement coaxiales.
